# EUROPEAN PATENT APPLICATION

(11) **EP 4 741 951 A1**
(43) Date of publication of application: **13.05.2026**
(21) Application number: 25213460.6
(22) Date of filing: 04.11.2025
(51) Int. Cl.: G05B 9/03, G05B 19/042

(54) **A CONTROL SYSTEM**

(30) Priority: 06.11.2024 GB 202416344
(71) Applicant: Evolito Ltd, Bicester, Oxford Oxfordshire OX25 2PA (GB)
(72) Inventor: WILLIAMS, Connel, Princethorpe, CV23 9QA (GB); VIJAYAKUMAR, Franklin, Princethorpe, CV23 9QA (GB); ALI, Bertan, Princethorpe, CV23 9QA (GB); TEJPAL, Ritish, Princethorpe, CV23 9QA (GB)
(74) Representative: Marks & Clerk LLP

(57) **Abstract**

A control system comprising an actuator and a system controller that outputs a command for controlling the actuator. A primary controller within the control system generates a primary control signal for controlling the actuator based on a system controller command and primary sensor data from one or more primary sensors. A secondary controller within the control system generates a secondary control signal for controlling the actuator based on the system controller command and secondary sensor data from one or more secondary sensors. A control signal router within the control system routes either the primary control signal or the secondary control signal to the actuator based on a routing command that is generated by a primary monitor that is part of the secondary controller.

## Description

### FIELD OF THE INVENTION

The present invention relates to improvements in control system integrity in the face of system component failure in safety critical applications.

### BACKGROUND OF THE INVENTION

Though the present invention is applicable to a wide variety of applications including battery management systems, automotive power steering, control of avionic surfaces, generator and motor control, DCDC converters, etc, the focus here will be in motor control, though it is to be understood this application is not limiting.

There are several instances where failure of an electric propulsion motor may cause critical safety issues. Automotive is clearly one such, generators for medical facilities, nuclear power plant control systems are others, but arguably of greatest safety concern is loss of motive power in in-flight aerospace applications.

In the field of aviation safety, ensuring the reliable operation of aircraft control systems is paramount as failures in these systems can lead to catastrophic consequences. Though multiple redundant systems are generally uneconomic for land and sea-based applications, because alternative less costly options are available, because of the need to stay airborne, and land safely, redundant control systems have been a standard approach for aerospace.

WO2016193884 teaches a triple redundant safety control system controlling a quadcopter for which opposing propellor and power units (effectors) are paired, with each effector pair being sufficient to support flight in the event one effector fails. There are master and slave control units and an emergency master unit providing triple redundancy of control. Various control architectures using triple redundant components are taught and such systems inevitably rely on fast communications to enable effective transfer of control authority. This highlights a problem with triple redundant systems in that apart from cost of duplicate components, there is reliance on high-speed signalling which of itself carries a high cost of robust implementation.

Duplex Systems, also known as Dual Redundancy Systems, involve two parallel sets of control units. Unlike TMR, where three units operate simultaneously, Duplex Systems typically consist of two identical systems: a primary unit and a backup unit. Each system operates independently but processes the same inputs, usually from separate transducer inputs. The primary system usually handles all control tasks under normal conditions, while the backup system remains in standby mode, continuously monitoring the primary system's performance. US4032757A teaches such a system in which duplicate control systems operate independently with their own monitors that check their own system inputs and outputs which are compared to the other system. Data input / output is sequentially processed in each system and compared not only between systems, but in comparison to the last cycle and/or stored look-up table. Differences between the last and present cycle / look-up table e.g., for transducer data show if a transducer has failed. If the difference between the two control units is small then the primary unit uses the mean of the two independently arrived at signals and its difference to the asked-for control value to set a new control output. Other comparison strategies are also taught.

The implementation of TMR and Duplex Systems, including advanced variants, represents a fundamental strategy in ensuring the failsafe operation of aircraft control systems. These redundancy techniques provide a robust framework for maintaining control integrity in the face of component failures, thereby significantly enhancing the safety and reliability of aviation systems. The present invention seeks to further refine these methods, offering novel approaches to optimising redundancy and fault tolerance in complex control environments.

EP3839688 teaches a variant of a duplex system for control of multiple motor units each managing a specific motor through a primary motor controller. These controllers are interconnected with a central system control unit (COMstring) and a system monitoring unit (MONstring), which oversees the overall functionality and safety of the system. The system includes primary and secondary motor controllers, with switches that can alter the control path to the motors in response to detected malfunctions. The MONstring can disable communications between the COMstring and motor controllers, or directly between motor controllers and motors, to prevent damage or unsafe conditions. Malfunctions are detected by sensors that monitor the operational state of the motors, such as temperature and rotation speed. In case of detected issues, the system can switch control from primary to secondary controllers, ensuring continued safe operation. EP3839688 teaches primary and secondary motor controllers for each motor. In the event of a failure in a primary controller, the system can switch control to the secondary controller, ensuring continued operation of the motor.

US2022097828 teaches a duplex control system for a VTOL aircraft with multiple motor-driven rotors. The control system processes pilot or autopilot commands to generate a desired state vectors and motor control commands for the drive units. The actual state of the aircraft, being determined by independent sensors which is fed back into the control system to adjust these commands, ensuring stable flight. The system employs two flight control units (CTRL-1 and CTRL-2) that use different control 'laws' (algorithms) to enhance reliability. CTRL-1 is the primary unit, while CTRL-2 serves as a backup. If CTRL-1 fails, CTRL-2 takes over. To ensure a smooth transition, control commands are synchronized using correction or monitor blocks, which adjust key parameters between CTRL-1 and CTRL-2 to ensure consistency in thrust and torque between primary and backup.

In prior art systems, there is reliance on at least duplicate control units with such units often being physically separated with independent sensor and monitor functionality. Such independence and spatial separation rely on multiple fast incorruptible communication lines which are costly to implement. In the light of these deficiencies, we have seen a reason to provide improvements in control architecture for high reliability and safety critical systems.

### SUMMARY OF THE INVENTION

The present invention is defined by the independent claims appended hereto. Further advantageous embodiments are also defined by the dependent claims, also appended hereto.

We describe a control system comprising: an actuator; a system controller for outputting a command for controlling the actuator; a primary controller coupled to the system controller and configured to generate a primary control signal for controlling the actuator based on the system controller command and primary sensor data from one or more primary sensors; a secondary controller coupled to the system controller and configured to generate a secondary control signal for controlling the actuator based on the system controller command and secondary sensor data from one or more secondary sensors; a control signal router coupled to the primary controller and secondary controller and to the actuator, the control signal router being configured to route the primary control signal or the secondary control signal to the actuator based on a routing command, wherein the secondary controller comprises a primary monitor that is configured to compare the primary and secondary control signals and to generate a primary routing command based on the comparison of the primary and secondary control signals.

By providing the primary monitoring function as part of the secondary controller, this reduces the number of computational components (or enables lower powered or slower performing microprocessors) required to perform the monitoring and switching functions between the primary controller output to the actuator or the secondary controller output to the actuator in the event of, for example, the primary controller failing. Using a control or monitoring function with different and potentially less sophisticated control hardware is advantageous as it improves safety by removing a source of common mode failure.

The one or more primary sensors may be independent of the one or more secondary sensors. The primary controller may be independent of the secondary controller.

The primary monitor may be configured to detect a failure in the primary controller from the comparison of the primary control signal and the secondary control signal, and wherein the primary monitor generates a primary routing command to cause the control signal router to switch from routing the primary control signal to the actuator, to routing the secondary control signal to the actuator in response to detecting a failure in the primary controller.

The control system may comprise a secondary monitor coupled to the secondary controller and control signal router and may be configured to detect a failure in the secondary controller and generate a secondary routing command based on the detection of a failure in the secondary controller. The secondary routing command may enable the routing of the secondary control signal to the actuator when no failure is detected in the secondary controller. The secondary routing command may inhibit the routing of the secondary control signal to the actuator when a failure is detected in the secondary controller.

The secondary monitor may receive a secondary controller command from the primary monitor, the secondary controller command comprises at least a portion of the command generated by the system controller, the secondary monitor being configured to detect a failure in the secondary controller by: comparing the secondary control signal with a control signal based on the secondary controller command and tertiary sensor data from one or more tertiary sensors; and detect whether or not that there is a failure in the secondary controller based on the comparison of the secondary control signal from the secondary controller with a control signal based on the secondary controller command and the tertiary sensor data. The one or more tertiary sensors may be independent of the primary and secondary sensors.

The control system may comprise a latch controller coupled to the primary monitor and secondary monitor, the latch controller being configured to enable or disable the control signal router from switching between the primary control signal or secondary control signal based on a detected failure state of the primary and secondary controllers. The latch controller may be part of the secondary monitor.

The system controller may be configured to override the routing control signals.

The primary and secondary controllers each may comprise a respective processor, and wherein the processor in the secondary controller is lower-powered than the processor in the primary controller.

The secondary controller and primary monitor may be co-located with each other, or wherein the secondary controller and primary monitor may be part of the same processor.

The control system may be suitable for an axial flux machine. In such an arrangement, the actuator may comprise an inverter for generating a multi-phase AC output voltage for powering an axial flux machine. The axial flux machine may be an axial flux motor or generator. In such an arrangement, the system controller command may comprise a demand torque and/or speed condition for the axial flux machine.

We also describe An Electric Propulsion Unit (EPU) comprising: an electrical machine; and a control system as described above, wherein the actuator may comprise an inverter for generating a multi-phase AC output voltage for powering the electric machine.

In such an EPU arrangement, there may be provided a second control system as described above. In such an arrangement the electric machine may comprises a stator having first and second electrically isolated groups of stator bars in the same electrical machine, the first and second isolated groups of stator bars magnetically interacting with a common rotor, wherein the first control system is electrically coupled to the first electrically isolated group, and the second control system is electrically coupled to the second electrically isolated group.

In any of the above, wherein the electrical machines are axial flux electrical machines. The electrical machines may be motors or generators.

The system controller command may comprise a demand torque and/or speed condition for the axial flux machine.

### LIST OF FIGURES

Figure 1 shows a prior art non-safety critical control system architecture;
Figure 2 shows prior art safety critical control system architecture;
Figure 3 shows a critical control system architecture according to the present invention;
Figure 4 shows an example arrangement in which the control system is used in an EPU; and
Figure 5 shows an alternative arrangement in which the control system is used in an EPU.

### DETAILED DESCRIPTION OF THE PREFERRED EMBODIMENTS

The present invention relates to safety critical control systems generally.

In brief, we describe a control system comprising an actuator and a system controller that outputs a command for controlling the actuator. A primary controller within the control system generates a primary control signal for controlling the actuator based on a system controller command and primary sensor data from one or more primary sensors. A secondary controller within the control system generates a secondary control signal for controlling the actuator based on the system controller command and secondary sensor data from one or more secondary sensors. A control signal router within the control system routes either the primary control signal or the secondary control signal to the actuator based on a routing command that is generated by a primary monitor that is part of the secondary controller.

By providing the primary monitoring function as part of the secondary controller, this reduces the number of computational components (or enables lower powered or slower performing microprocessors) required to perform the monitoring and switching functions between the primary controller output to the actuator or the secondary controller output to the actuator in the event of, for example, the primary controller failing. Using a control or monitoring function with different and potentially less sophisticated control hardware is advantageous as it improves safety by removing a source of common mode failure.

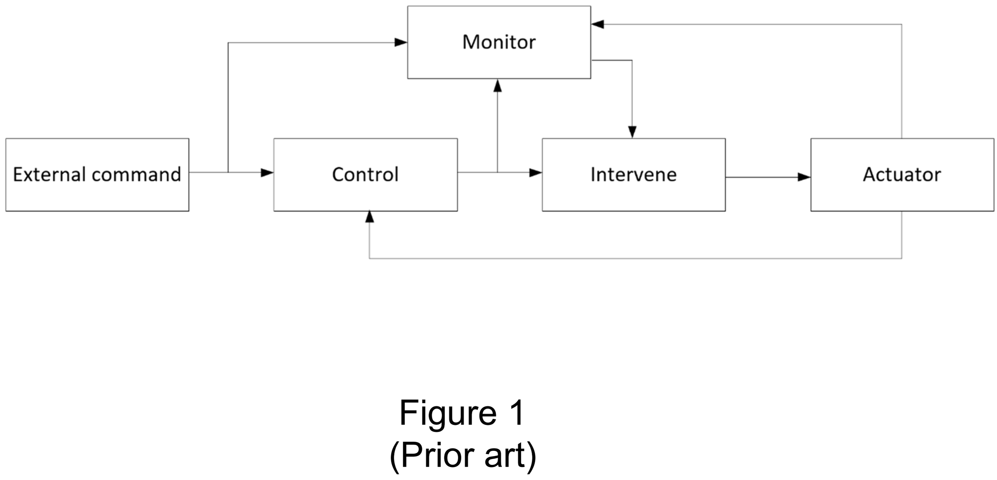

With reference to Figure 1 (prior art) which shows a typical non-safety critical control architecture, there is shown a block diagram of a control system for an electric motor, in which an external command, e.g., human, perhaps the driver of an electric vehicle, interfaces with a control block to request more speed. The control block receives information from the actuator in order to perform the control. The external command is also sent to a monitor block which stores the request for more speed. The control sends a signal to the actuator via an intervene block. The control output is also sent to the monitor block which assesses whether the control output is plausible. The monitor block also receives information from the actuator (where this information is independent to the information sent from the actuator to the control block) to assess whether the control blocks performance is as required. So long as the monitor block assessment is true, then control data is allowed through the intervene block to the actuator and the speed is changed.

A consequence of the control and monitor block structure is that there is loss of motor control if the monitor block detects a failure of the control block as no further signals can be sent to the actuator.

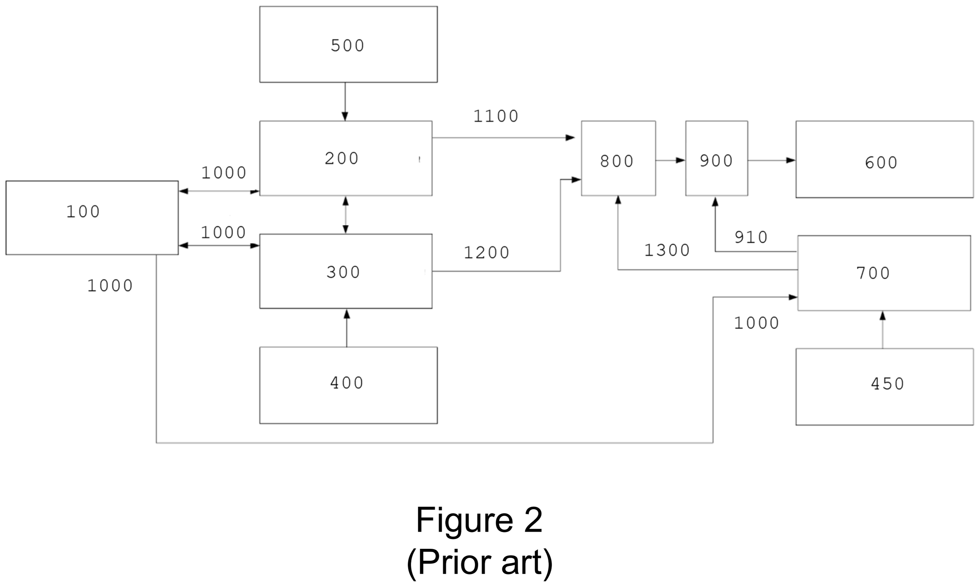

With reference to Figure 2 there is shown a prior art approach to overcoming a total loss of control in the instance where a controller fails.

A vehicle controller 100 sends a demand 1000 to, the primary motor control 200, the secondary motor control 300, and the monitor 700, such that monitor 700 can compare the demand signal 1000 to the primary motor control 200 as it traverses the PWM routing block 800 and the intervene block 900.

The primary motor control 200 uses a 1^{st} set of independent sensor measurements 500 specifically for its own use and provides primary PWM signals 1100 to the PWM router 800 as an output from its control function.

The secondary motor control 300 also receives the demand 1000 and produces the secondary PWM signals 1200.

The secondary motor control 300 uses a set of independent sensor measurements 400 that differ from those used by the primary motor control function.

The monitoring function 700 uses a set of independent sensor measurements 450 that differs from those used by the primary motor control function and those used by the secondary motor control function.

The monitoring function 700 can change the PWM Signal Routing from the primary motor control function to the secondary motor control function via a routing command 1300, for example, if a failure in the operation of the primary motor control 200 has been detected by the primary monitor 700.

The monitor 700 will permit the resultingly routed PWM signals to transfer to the inverter power electronics 600 only if it has not detected a failure in the operation of the secondary motor control 300 else, it will prevent the resultingly routed PWM signals to transfer using a secondary inhibit command 910 sent to block 900.

The vehicle controller 100 can via demand routing 1000 also override the control signals signal routing in cases where it wishes to take full control, for example, if another unit has failed, the vehicle may wish to keep the current unit operation for as long as possible, even with a slight control error.

A problem with this prior art approach is that it relies on three different computational units (for example microprocessors) in control units 100, 200 and 300 and relies on three high speed connections 1000 to the vehicle controller 100.

Hereafter we will focus on motor control in the safety critical application of vertical take-off and landing aircraft, although it would be understood by the reader that other applications using controllers and actuators is possible. Some other applications include, for example, helicopters, STOL (Short Take Off and Landing) aircraft. Specifically, the invention will be applied to the instance where there is loss of motor control if the primary monitor function detects a failure of the primary motor control function and intervenes to prevent the primary motor control function from operating the inverter. However, it would be understood that such control system architecture may be used in other systems, for example a non-limiting list of other uses may comprise: the control system being used more generally with electric motors (radial or axial flux) for different vehicles, Battery Management Systems and DCDC converters.

In its broadest sense, the control system 10 comprises an actuator and a system controller that outputs a command for controlling the actuator. A primary controller within the control system generates a primary control signal for controlling the actuator based on a system controller command and primary sensor data from one or more primary sensors. A secondary controller within the control system generates a secondary control signal for controlling the actuator based on the system controller command and secondary sensor data from one or more secondary sensors. A control signal router within the control system routes either the primary control signal or the secondary control signal to the actuator based on a routing command that is generated by a primary monitor that is part of the secondary controller.

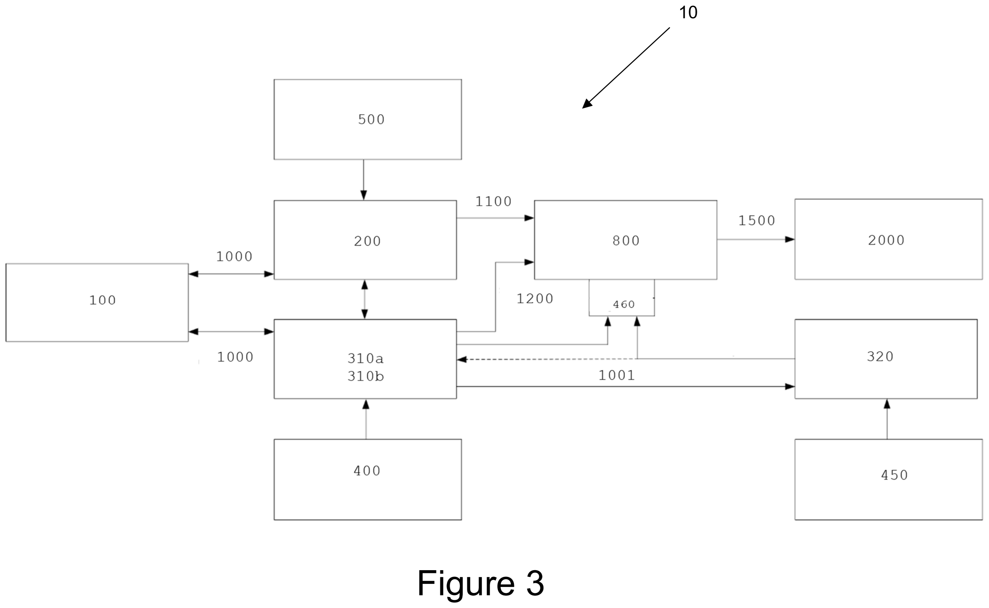

With reference to Figure 3, in which all corresponding references to prior art Figure 2 logic block components are similarly numbered, it will be shown that the present invention introduces a novel structure by which the monitor function can take over the motor control function if the control block fails.

The system or vehicle controller 100 demand 1000 is sent to the primary controller or control function 200 and the primary monitor or monitoring function 310a so that the primary monitoring function 310a can compare this to the output resulting from the primary control function 200.

The primary control function 200 uses a set of independent primary sensor measurements 500 specifically for its own use and provides the primary control signals 1100 as an output from its control function.

The secondary controller or control function 310b housed in the same physical environment, box, or cabinet. In some arrangements, the secondary controller 310b may even be formed in the same microprocessor as the primary monitoring function 310a. The secondary controller 310b and primary monitor 310a also receives the demand 1000 and can produce the secondary control signals 1200 when required. The secondary control function 310b and primary monitoring function 310a use a set of independent secondary sensor measurements 400 that differ from or are independent of those used by the primary control function.

The primary monitoring function 310a can request a change to the Control Signal Routing 800 from the primary control function 200 to the secondary control function 310b via the primary routing command if a failure in the operation of the primary control function 200 has been detected by the primary monitoring function 310a. In practice, the primary monitor 310a compares the demand from the vehicle controller 100 to what has actually been achieved by the actuator 2000 using the primary control function 200. If the difference is greater than a threshold, the primary monitor 310a may take the action of routing the secondary control function 310b to the actuator 2000 rather than the primary control function 200 using the primary routing command.

The secondary monitor 320 receives the demand 1001 (speed or torque requirements) and compares the action of the secondary monitor function against the demand. If the secondary monitor 320 does not detect a failure in the operation of the secondary control function 310b it will permit the primary monitoring function 310a to select the secondary control signals 310b via a secondary routing command. The demand 1001 signal is passed through the primary monitor 310a and comprises at least a portion of the command generated by the system controller. The demand 1001 does not require to be sent via a high speed data link to the secondary monitor 320. If the secondary monitor 320 does detect a failure in the operation of the secondary control function 310b it will inhibit the selection of the secondary control signals 310b via the secondary routing command.

A latch 460 prevents a limit cycle if the primary 200 or secondary 310b controls become operational i.e., move out of a failure state. Latching function 460 shown in Figure 3 as a separate control block, may instead be written as code in the secondary monitor 320. At least in the instance where the latching function is programmed into the secondary monitor block 320, a power down will be required to reset the system.

The latch is triggered by the first change of routing away from the output of the primary controller 1100 to the output of the secondary controller 1200 (due to the error in operation of primary controller 200 as determined by the primary monitor 310a passing a threshold). The routing is then latched to stop it changing back to the output of the primary controller 1100 if the error dips momentarily below the threshold. The purpose of using a latch in this configuration is to prevent chatter between routing settings. The latch is reset during a definable state, for example when primary controller 200 has rebooted/reset and left the failure state.

The latch function may be implemented using a state machine. The state machine may have states of: power-up check, normal operation, failure of the primary controller 200, primary controller 200 in reset, primary controller 200 recheck, (then back to normal operation). Other states may be possible.

In the event that the primary controller is in a failed condition, this may be recovered, or an attempt to recover the primary controller in a number of ways. The primary controller may be "hot reset", where the processor is left powered but forced to go back to its reset/power-up vector (the start of the program). An alternative is a "cold reset" which is where the primary controller is power cycled (for example by temporarily removing its power supply), which forces the primary controller to go back to the reset/power-up vector. Some safety cases call for a full power cycle to guarantee the RAM and other memory within the primary controller has been returned to the power up state.

As was the case in the prior art example, the vehicle controller 100 can override the control signals signal routing 1100 into 800, in cases where the vehicle controller 100 needs to take full control, for example if another unit has failed, the vehicle may wish to keep the current unit operational for as long as possible, even with a slight control error.

There are operational conditions where the vehicle controller may override any local safety systems including the primary monitor 310a. Such conditions include when another system of the vehicle has failed (say due to a fault in another controller) so the vehicle has moved to a different safety case which avoids the use of the secondary controller 310b.

The resultingly routed control signals 1500 are connected to the actuator 2000, which for example could be inverter power electronics in a motor control.

In order to lower cost, the secondary monitor 320 may be implemented on an FPGA (or similar logic device such as low-cost microcontrollers) to reduce the number of processors. Using a control function with different and less sophisticated control hardware FPGA is advantageous as it improves safety by removing a source of common mode failure.

Within the system described above, techniques may be implemented in order to reduce the number of sensors. For example, torque monitoring may be provided without the need for dedicated sensors.

In the example of a motor controller, the primary controller 200 might use look up tables for flux and other parameters, and have a high resolution motor model that relies on data from high resolution phase current sensors. This is so that normal operation gives the best performance including efficiency. If the primary monitor switches to the output of the secondary controller 310b, this might use the dc voltage and dc current and the speed of the motor. The input power may be determined from the dc. From a simple model (for example a lookup table) it can determine controller losses to get the estimated output power. The output power divided by the speed gives the torque. This is an example of a simple low performance method that does not use similar sensors or methods to the primary controller 200. As such, this technique reduces the chance of a common error in the models affecting both the primary controller 200 and secondary controller 310b.

The primary control function 200 may also work without speed / position sensors.

In VTOL we may remove the position/speed senor input to the primary controller 200 and run it in a "pos/speed sensorless" mode to save cost and complexity of the pos/speed sensor. The primary monitor 310a and secondary controller 310b may still use the pos/speed sensor, but since only the primary monitor 310a and secondary controller 310b use the position/speed sensor, instead of also needing a secondary sensor for the primary controller 200, the number of sensors is reduced.

As already discussed, the above control system may be used, for example, with electrical machine, for example electric motors. More specifically, the control system may be used to control axial flux machines such as axial flux motors or generators.

Broadly speaking, in such arrangements, the control system controls the output of the actuator (in this instance the inverter) that provides a multi-phase output voltage and current to the electrical inputs of the axial flux machine.

In some arrangements of the axial flux machine, the axial flux machine may be provided with a stator arrangement that comprises two or more electrically isolated groups of stator bars that magnetically interact with a common rotor of the axial flux machine. In such an arrangement, a first control system as discussed above is electrically coupled to the first group of stator bars to drive those stator bars as required. A second control system as described above is provided and electrically coupled to the second group of stator bars to drive those stator bars as required.

Such arrangements may be provided, for example, in an electrical propulsion system (EPU).

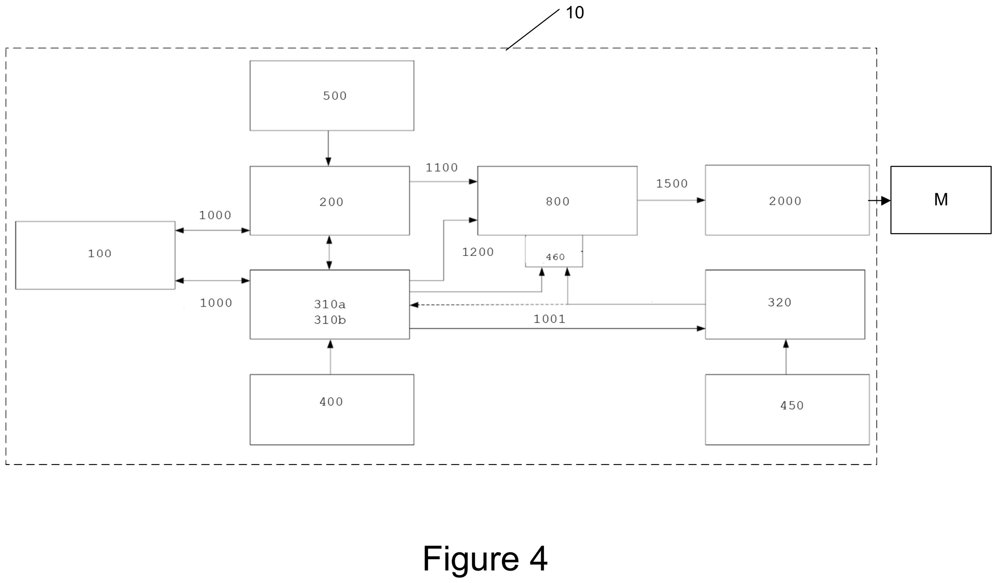

Figure 4 shows an example arrangement in which the control system 10 is used in an EPU. The EPU comprises an electric machine M such as an electric motor electrically coupled to the control system 10 as described above. In such an arrangement, the actuator 2000 is an inverter, and the inverter supplies a multi-phase AC power to the electric machine M in order to drive the electric machine M based on the demand from the vehicle controller 100.

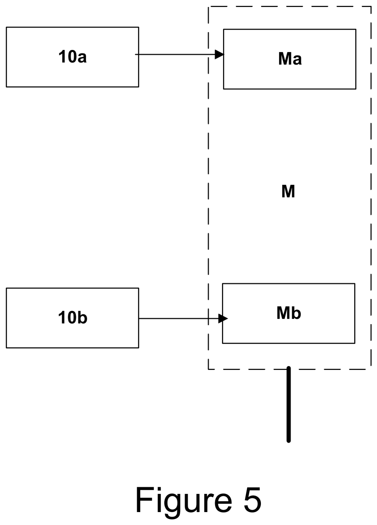

Figure 5 shows an alternative arrangement in which the control system is used in an EPU. In this arrangement, independent control systems 10a, 10b are configured to drive the same electric machine M.

In this arrangement, the electric machine M may be electric machine comprising a stator having first Ma and second Mb electrically isolated groups of stator bars in the same electrical machine. The first Ma and second Mb isolated groups of stator bars magnetically interact with a common rotor and are mechanically coupled to the same output shaft. As such, the first control system 10a is electrically coupled to the first Ma electrically isolated group, and the second control system 10b is electrically coupled to the second Mb electrically isolated group of stator bars.

In any of the above EPU arrangements, the electric machine may be, for example, an axial flux machine, which may be configured as a motor or generator.

Whilst we have discussed the inventive concept in relation to inverter systems, in particular inverter systems used for electrical machine, other systems may benefit from this technique and structure.

Another example is a Battery Management System (BMS). In such a system, the actuator is a contactor between a battery and a load. The system measures the load (current and voltage) from the battery to the load (for example a motor controller). If the load is too high (more than a calculated available load), the system opens a contactor (the actuator) to prevent damage (fire etc). The primary control may use one set of current and voltage and battery cell temperature sensors and calculates the power permitted at the temperature given the state of charge of the battery (as modelled through the current and historical values of the three measurements mentioned). The primary monitor uses a battery bulk temperature and its own current and voltage measurements. It checks if the primary control is within a threshold value (for example 10%) of where the primary monitor believes the load available threshold is. The available load level may be transmitted to the vehicle controller, and so the primary monitor can listen to what the primary control has calculated. If the primary control load available level it out of tolerance, then the primary monitor actions the control signal router to use the output of the secondary control to the actuator. The secondary monitor has its own set of measurements to check if the secondary control is in tolerance (check if it has failed).

The techniques and arrangements may also be used DC-DC systems. In this case, the actuators may be power switches. The primary control sends switching commands to the power switches (the actuator). The primary control may be based on a voltage level demand sent from the vehicle controller. It may have one or more of input voltage, input current, output voltage, output current and power switch temperature measurements which it uses to maintain the required voltage in the most efficient (conversion efficiency) manner.

The primary monitor has output current and output voltage measurements and checks (for example based on a simple model) the operation of the primary control. On failure, the switching commands to the power switches (the actuator) are now taken from the secondary control, that is the primary monitor actions the router to use the control output from the secondary controller instead. The secondary control may use just output current and output voltage to provide switching commands. The secondary monitor has a measurement of the output voltage and checks this against the demand from the vehicle controller which was passed to it through the primary monitor. This is a relatively simple check.

No doubt many other effective alternatives will occur to the skilled person. It will be understood that the invention is not limited to the described embodiments and encompasses modifications apparent to those skilled in the art lying within the scope of the claims appended hereto.

## Claims

1. A control system comprising:
an actuator;
a system controller for outputting a command for controlling the actuator;
a primary controller coupled to the system controller and configured to generate a primary control signal for controlling the actuator based on the system controller command and primary sensor data from one or more primary sensors;
a secondary controller coupled to the system controller and configured to generate a secondary control signal for controlling the actuator based on the system controller command and secondary sensor data from one or more secondary sensors;
a control signal router coupled to the primary controller and secondary controller and to the actuator, the control signal router being configured to route the primary control signal or the secondary control signal to the actuator based on a routing command, wherein the secondary controller comprises a primary monitor that is configured to compare the primary and secondary control signals and to generate a primary routing command based on the comparison of the primary and secondary control signals.

2. A control system according to claim 1, wherein the one or more primary sensors are independent of the one or more secondary sensors, and/or
wherein the primary controller is independent of the secondary controller.

3. A control system according to any preceding claim, wherein the primary monitor is configured to detect a failure in the primary controller from the comparison of the primary control signal and the secondary control signal, and wherein the primary monitor generates a primary routing command to cause the control signal router to switch from routing the primary control signal to the actuator, to routing the secondary control signal to the actuator in response to detecting a failure in the primary controller.

4. A control system according to claim 3, comprising a secondary monitor coupled to the secondary controller and control signal router, the secondary monitor being configured to detect a failure in the secondary controller and generate a secondary routing command based on the detection of a failure in the secondary controller.

5. A control system according to claim 4, wherein the secondary routing command enables the routing of the secondary control signal to the actuator when no failure is detected in the secondary controller.

6. A control system according to claim 4 or 5, wherein the secondary monitor receives a secondary controller command from the primary monitor, the secondary controller command comprises at least a portion of the command generated by the system controller, the secondary monitor being configured to detect a failure in the secondary controller by:
comparing the secondary control signal with a control signal based on the secondary controller command and tertiary sensor data from one or more tertiary sensors; and
detect whether or not that there is a failure in the secondary controller based on the comparison of the secondary control signal from the secondary controller with a control signal based on the secondary controller command and the tertiary sensor data.

7. A control system according to claim 6, wherein the one or more tertiary sensors are independent of the primary and secondary sensors.

8. A control system according to any one of claims 4 to 7, comprising a latch controller coupled to the primary monitor and secondary monitor, the latch controller being configured to enable or disable the control signal router from switching between the primary control signal or secondary control signal based on a detected failure state of the primary and secondary controllers.

9. A control system according to claim 8, wherein the latch controller is part of the secondary monitor.

10. A control system according to any preceding claim, wherein the system controller is configured to override the routing control signals.

11. A control system according to any preceding claim, wherein the primary and secondary controllers each comprise a respective processor, and wherein the processor in the secondary controller is lower-powered than the processor in the primary controller, and/or
wherein the secondary controller and primary monitor are co-located with each other, or
wherein the secondary controller and primary monitor are part of the same processor.

12. A control system according to any preceding, wherein the control system is for an axial flux machine, and wherein the actuator comprises an inverter for generating a multi-phase AC output voltage for powering the axial flux machine, optionally wherein the axial flux machine is an axial flux motor or generator, and/or wherein the system controller command comprises a demand torque and/or speed condition for the axial flux machine.

13. An Electric Propulsion Unit comprising:
an electrical machine; and
a control system according to any one of claims 1 to 11,
wherein the actuator comprises an inverter for generating a multi-phase AC output voltage for powering the electric machine.

14. An Electrical Propulsion Unit according to claim 13, comprising a second control system according to any one of claims 1 to 11,
wherein the electric machine comprises a stator having first and second electrically isolated groups of stator bars in the same electrical machine, the first and second isolated groups of stator bars magnetically interacting with a common rotor,
wherein the first control system is electrically coupled to the first electrically isolated group, and the second control system is electrically coupled to the second electrically isolated group, and/or
wherein the electrical machines are axial flux electrical machines, and/or
wherein the electrical machines are motors or generators.

15. An Electrical Propulsion Unit according to any one of claims 14, wherein the system controller command comprises a demand torque and/or speed condition for the axial flux machine.
